# FASCICULE DE BREVET EUROPEEN

(11) **EP 3 329 317 B1**
(45) Date de publication et mention de la délivrance du brevet: **10.07.2019**
(21) Numéro de dépôt: 16744409.0
(22) Date de dépôt: 27.07.2016
(51) Int. Cl.: G02B 27/01, G02B 5/02, G03B 21/28

(54) **AFFICHEUR TÊTE-HAUTE COMPACT**
KOMPAKTE ÜBERKOPFANZEIGE
COMPACT HEAD-UP DISPLAY DEVICE

(30) Priorité: 27.07.2015 FR 1557154
(43) Date de publication de la demande: 06.06.2018
(73) Titulaire: Valeo Comfort and Driving Assistance, 94046 Créteil Cedex (FR)
(72) Inventeur: IRZYK, Michael, 94046 Créteil Cedex (FR); MERMILLOD, Pierre, 94046 Créteil Cedex (FR)
(74) Mandataire: Delplanque, Arnaud
(86) Numéro de dépôt international: PCT/EP2016/067962
(87) Numéro de publication internationale: WO 2017/017162

(56) Documents cités:
- US-A1- 2011 157 707
- US-A1- 2014 268 358

## Description

La présente invention concerne un afficheur tête-haute compact, notamment pour véhicule automobile.

Les afficheurs tête haute, tels que par exemple décrits dans les publications US 2014/268358 A1 et US 2011 /157707 A1, ont généralement pour fonction de superposer des informations d'aide au pilotage, à la navigation ou à la réalisation de la mission, dans le champ de vision d'un pilote d'aéronef par exemple. Il permet ainsi au pilote de surveiller son environnement en même temps que de lire des informations fournies par ses instruments de bord. Aujourd'hui, ces afficheurs sont également utilisés dans l'automobile.

De tels dispositifs comprennent un générateur d'image et un élément optique semi-réfléchissant configuré pour former une image virtuelle de l'image du générateur. L'image virtuelle est superposée à l'environnement dans le champ de vision du conducteur ou du pilote. Il est également possible d'utiliser le pare-brise du véhicule comme élément optique semi-réfléchissant pour former l'image virtuelle. Les caractéristiques techniques d'un tel dispositif se rapportent notamment à la position de l'élément optique par rapport à la route et au conducteur, ainsi qu'à l'angle d'incidence de l'image sur l'élément optique, afin notamment d'éviter les problèmes de distorsion.

Les générateurs d'image connus dans l'automobile, comprennent une ou plusieurs sources de lumière et une matrice de pixellisation qui reçoit le faisceau lumineux des sources. La matrice transmet ou réfléchit le faisceau lumineux en imprimant une image qui est formée grâce aux pixels. Chaque pixel est commandé individuellement, et peut soit avoir une position dite « ouverte », dans laquelle la lumière incidente participe à l'image, soit une position dite « fermée », dans laquelle la lumière incidente ne participe pas à l'image affichée. Ainsi, en fonction des pixels ouverts, on compose une image. On peut également utiliser un balayage laser comme moyen de formation d'images.

Il existe différents types de matrices, notamment les matrices de transistors de type TFT (pour « Thin Film Transistor » en anglais, qui signifie transistors en couches minces), qui fonctionnent en transmission de lumière, c'est-à-dire que le faisceau lumineux des sources traverse la matrice qui est agencée entre la source de lumière et l'élément optique. On connait aussi les matrices de type LCOS (pour « Liquid Crystal on Silicon » en anglais, qui signifie cristaux liquides sur silicium), et les matrices de micro-miroirs de type DMD (pour « Digital Micro-Mirror Device» en anglais, qui signifie dispositif digital à micro-miroirs), qui fonctionnent par réflexion du faisceau lumineux vers l'élément optique.

Un observateur voit l'image virtuelle à travers l'élément optique, l'image virtuelle apparaissant d'un côté de l'élément optique, alors que l'observateur est situé de l'autre côté de l'élément optique. De plus, les yeux de l'observateur doivent être positionnés dans une fenêtre de vue, communément appelée « boîte à oeil ». La position de la fenêtre de vue est définie par la position de l'image virtuelle par rapport à l'élément optique. Ainsi, en dehors de cette fenêtre de vue, il n'est pas possible de voir l'image virtuelle.

Pour simplifier, l'afficheur est agencé dans le véhicule en général de la façon suivante : le générateur d'images est disposé dans le tableau de bord avec un miroir qui réfléchit l'image vers l'élément optique semi-réfléchissant. L'élément optique est agencé sur le tableau de bord au niveau du pare-brise de manière à être dans les champs de vision du conducteur.

Cependant, le générateur d'image doit être disposé à une distance minimale de l'élément optique pour que l'image virtuelle soit de dimension suffisante, sachant, d'une part que la taille des matrices est limitée, et d'autre part que l'image virtuelle doit apparaître à environ deux mètres du conducteur. Le chemin optique de l'image jusqu'à l'élément optique a par conséquent une longueur minimale. Cet agencement de l'afficheur prend donc un espace assez important dans l'épaisseur du tableau de bord.

L'invention vise donc à obtenir un afficheur tête haute compact, qui garde un chemin optique de l'image longueur suffisante, et qui ne demande pas d'agrandissement du générateur d'image ou de modification de l'élément optique.

Pour cela, l'invention concerne un afficheur tête haute, notamment pour véhicule automobile, comportant un générateur d'image configuré pour afficher une image sur une surface d'affichage, un élément optique semi-réfléchissant agencé à distance du générateur d'image et configuré pour former d'un premier côté de l'élément optique une image virtuelle de l'image du générateur d'image, l'image virtuelle étant visible depuis une fenêtre de vue située d'un deuxième côté de l'élément optique.

L'afficheur est remarquable en ce qu'il comporte une pièce optique configurée pour allonger le chemin optique de l'image la traversant en allant du générateur d'image à l'élément optique, la pièce optique comportant au moins une face d'entrée et une face de sortie de l'image, ainsi qu'une première et une seconde face réfléchissante, la première face réfléchissante étant configurée pour réfléchir l'image de la face d'entrée vers la seconde face réfléchissante, et la seconde face réfléchissante étant configurée pour réfléchir l'image de la première face réfléchissante vers la face de sortie, la face d'entrée étant en outre sensiblement en contact avec la surface d'affichage du générateur d'image.

Ainsi, grâce à la pièce optique le chemin optique de l'image entre le générateur d'image et l'élément optique semi-réfléchissant est allongé en le traversant. Les faces de réflexion réfléchissent l'image de sorte que le chemin optique à l'intérieur de l'élément optique est plus que doublé par rapport à un passage direct à travers l'élément optique.

L'invention permet donc d'obtenir un afficheur plus compact car la distance entre le générateur d'image et l'élément optique semi-réfléchissant est plus petite, ce raccourcissement étant compensé par la pièce optique qui permet à l'afficheur de conserver la longueur nécessaire du chemin optique.

En outre, selon les dispositions de l'élément optique et de sa face d'entrée et sa face de sortie, le chemin optique peut être orienté différemment en sortie par rapport à son orientation à l'entrée dans la pièce optique. Ainsi, on n'est pas obligé de placer le générateur d'image dans l'axe de l'élément optique semi-réfléchissant.

Selon différents modes de réalisation de l'invention, qui pourront être pris ensemble ou séparément :
- les faces sont ordonnées latéralement sur la périphérie de la pièce optique de la façon suivante : première face de réflexion, face d'entrée, face de sortie, et seconde face de réflexion,
- le générateur d'image et la pièce optique sont solidaires en déplacement,
- le générateur d'image et la pièce optique sont assemblés par une colle optique,
- la pièce optique est un pentaprisme comportant une face latérale supplémentaire,
- la face supplémentaire est disposée entre les première et seconde faces réfléchissantes,
- l'afficheur comprend des moyens mécaniques configurés pour déplacer la pièce optique afin d'ajuster la fenêtre de vue verticalement,
- les moyens mécaniques sont configurés pour déplacer la pièce optique afin d'ajuster la fenêtre de vue latéralement,
- la face de sortie forme une fenêtre de fermeture de l'afficheur,
- la face de sortie est de forme convexe ou concave,
- l'élément optique est une lame semi-réfléchissante,
- l'élément optique est une partie d'un pare-brise de véhicule,
- le générateur d'image comprend au moins une source de lumière apte à émettre un faisceau lumineux, et une matrice de pixellisation configurée pour former l'image virtuelle à partir du faisceau lumineux,
- la matrice de pixellisation est une matrice de transistors en couches minces,
- la matrice de pixellisation est une matrice de micro-miroirs,
- l'afficheur comprend au moins un miroir agencé de manière à réfléchir l'image du générateur d'image sortant de la pièce optique vers l'élément optique.

L'invention sera mieux comprise à la lumière de la description suivante qui n'est donnée qu'à titre indicatif et qui n'a pas pour but de la limiter, accompagnée du dessin joint des figures suivantes :
- la figure 1, illustrant de façon schématique, un mode de réalisation d'un afficheur selon l'invention,
- la figure 2, illustrant de façon schématique, une vue en coupe d'un pentaprisme avec le chemin optique de l'image représenté,
- la figure 3, illustrant de façon schématique, une vue en coupe d'un pentaprisme avec une face de sortie courbée.

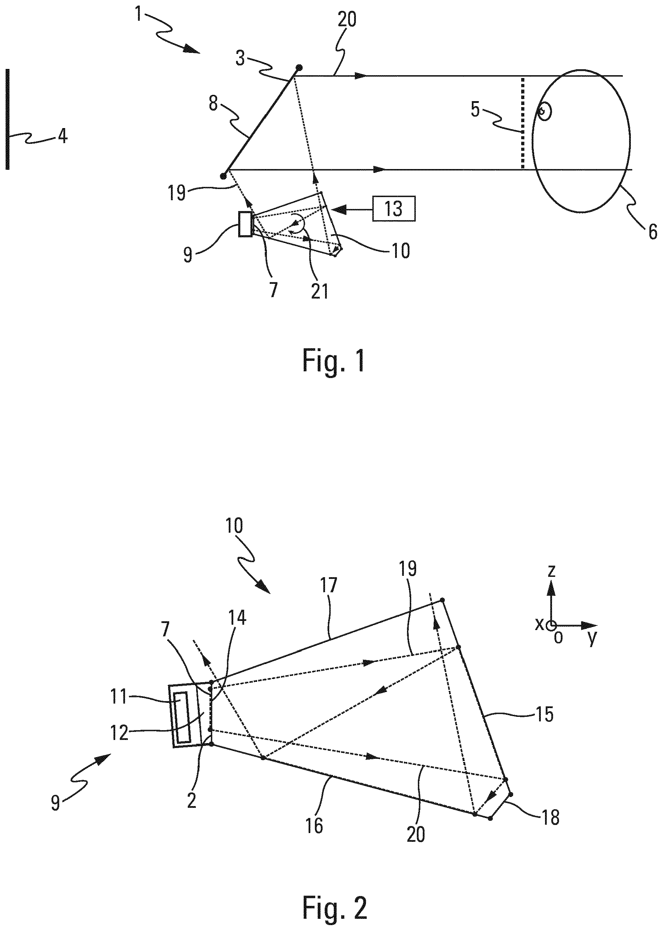

La figure 1 représente le fonctionnement d'un afficheur tête-haute 1, par exemple d'un véhicule automobile. L'afficheur 1 comprend un générateur d'image 9, configuré pour afficher une image 7 sur une surface d'affichage 2, comme la montre la figure 2 plus en détail. Le générateur d'image 9 comprend par exemple au moins une source de lumière 11 apte à émettre un faisceau lumineux, et une matrice de pixellisation 12 configurée pour former l'image 7 à partir du faisceau lumineux. Les sources de lumière 11 sont par exemple des diodes électroluminescentes, qui sont disposées dans une partie du générateur. Le générateur comporte la matrice de pixellisation 12, par exemple de type TFT, sur sa face de sortie. Ainsi, les diodes émettent un faisceau vers la matrice 12 qui forme une image 7 en transmission sur la surface d'affichage 2 du générateur d'image 9. Le générateur d'image 9 est par exemple configuré pour former une image sensiblement rectangulaire.

Sur la figure 1, l'afficheur 1 comprend également un élément optique 3 semi-réfléchissant agencé à distance du générateur d'image et configuré pour faire apparaître d'un premier côté de l'élément optique 3 une image virtuelle 4 de l'image 7 de la surface d'affichage 2. L'image virtuelle 4 est visible pour un observateur 6 s'il regarde l'élément optique 3 en étant placé de l'autre côté de l'élément optique 3. Comme le montre la figure 1, l'image 7 est réfléchie en direction de l'observateur 6, par une partie 8 de la surface de l'élément optique 3. Le trajet de l'image 7 est représenté par des flèches 19, 20. L'élément optique 3 forme ainsi une image virtuelle 4 de l'image 7, qui apparaît du premier côté à une certaine distance de l'élément optique 3.

L'observateur 6 doit être du deuxième côté de l'élément optique 3, et il voit l'image virtuelle 4 si ses yeux sont à l'intérieur d'une fenêtre de vue 5, également connue sous le nom de « boîte à oeil », située du deuxième côté de l'élément optique 3. Les dimensions de la fenêtre de vue 5 sont définies par la taille et la forme de la partie 8 de la surface de l'élément optique 3 qui réfléchit l'image 7.

L'élément optique 3 permet ainsi à un observateur 6 à la fois de voir l'image virtuelle 4 et de voir à travers l'élément optique 3. Pour un observateur qui se trouve du deuxième côté de l'élément optique 3, l'image virtuelle 4 est superposée dans son champ de vision à l'environnement vu à travers l'élément optique 3. Ici, l'élément optique 3 est une lame semi-réfléchissante.

Dans un autre mode de réalisation de l'afficheur, utilisé dans un véhicule et qui n'est pas représenté sur les figures, une partie du pare-brise sert d'élément optique semi-réfléchissant. A cette fin, le reste de l'afficheur est agencé dans le tableau de bord de manière à pouvoir utiliser le pare-brise comme élément optique semi-réfléchissant. Dans ce cas, un miroir peut être agencé sur le chemin optique de l'image de manière à la réfléchir vers la partie du pare-brise.

Dans une variante non représentée sur les figures, l'élément optique présente une courbure pour porter une puissance optique afin de faire apparaître l'image virtuelle à une certaine distance de l'élément optique, et ainsi d'être superposée convenablement à l'environnement apparaissant dans le champ de vision de l'observateur. La puissance optique est une caractéristique physique, qui détermine la capacité d'un système optique à faire converger ou diverger la lumière. Elle est égale au rapport entre l'angle sous lequel l'oeil voit l'image en sortie du système et la taille de l'objet. La puissance optique permet donc de régler la taille de l'image virtuelle.

Selon l'invention, l'afficheur 1 comporte une pièce optique 10 configurée pour allonger le chemin optique de l'image 7 la traversant en allant du générateur d'image 9 à l'élément optique 3. Ici, la pièce optique 10 est un pentaprisme. Un pentaprisme comporte cinq faces latérales comprises entre deux faces terminales parallèles. Sur les figures, le pentaprisme 10 est représenté dans une vue en coupe, la coupe étant parallèle aux faces terminales de sorte que ses faces latérales 14 à 18 sont représentées par des segments. Un repère orthonormé (O,x,y,z) montre que les faces terminales et la coupe sont dans le plan (yOz) et les faces latérales s'étendent dans la direction Ox.

Comme représenté sur la figure 2, le pentaprisme 10 comporte une face d'entrée 14 de l'image 7, et une face de sortie 17, ainsi qu'une première 15 et une seconde 16 face réfléchissante. La face d'entrée 14 du pentaprisme est sensiblement en contact avec la surface d'affichage 2 du générateur d'image 9 pour éviter les pertes optiques. Les faces latérales du pentaprisme 10 sont ordonnées sur sa périphérie de la façon suivante : la seconde face de réflexion 16, la face d'entrée 14, la face de sortie 17, et la première face de réflexion 15. Autrement dit, elles sont adjacentes dans cet ordre. Le pentaprisme a une face supplémentaire 18 disposée entre les première 15 et seconde 16 faces de réflexion.

La forme du pentaprisme 10, notamment l'orientation des faces latérales les unes par rapport aux autres, est en outre optimisée pour minimiser l'encombrement du pentaprisme.

L'image 7 de l'afficheur est réfléchie à travers la face d'entrée 14 par la première face réfléchissante 15, vers la seconde face réfléchissante 16. Le trajet de l'image 7 dans le pentaprisme 10 est représenté par les flèches 19 et 20 qui représentent deux extrémités de l'image. La seconde face réfléchissante 16 réfléchit ensuite vers la face de sortie 17, l'image 7 renvoyée par la première face réfléchissante 15.

Pour pouvoir régler la position de la fenêtre de vue 5, l'afficheur 1 comprend des moyens mécaniques 13 configurés pour déplacer le pentaprisme 10. Comme indiqué par une flèche 21, les moyens mécaniques 13 agissent sur le pentaprisme 10, par exemple en le faisant tourner autour d'au moins un axe. Le déplacement du prisme modifie la direction de sortie de l'image reçue par la lame semi-réfléchissante 3, et change la partie 8 de la surface qui réfléchit l'image 7 en direction de l'observateur 6. Ainsi, on peut ajuster la fenêtre de vue 5, par exemple verticalement (selon l'axe Oz), mais aussi latéralement (selon l'axe Ox), si les moyens mécaniques 13 permettent de déplacer le pentaprisme 10 dans deux directions.

En outre, le générateur d'image 9 et le pentaprisme sont solidaires en déplacement, de sorte que l'image 7 du générateur d'image 9 soit toujours bien orientée par rapport à la face d'entrée 14 du pentaprisme 10, et ainsi que le déplacement ne nuise pas à la qualité de la transmission de l'image. Le générateur d'image 9 est par exemple fixé au pentaprisme 10 grâce à une colle optique, dont l'indice de réfraction est adapté et qui permet en outre de limiter les réflexions parasites.

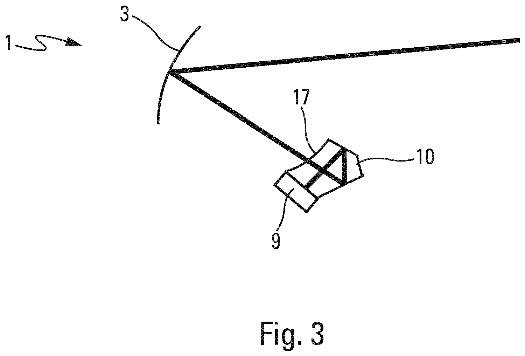

Dans un mode de réalisation représenté sur la figure 3, la face de sortie 17 du pentaprisme forme une fenêtre de fermeture pour l'afficheur. Une fenêtre de fermeture sert notamment à protéger certains éléments de l'afficheur de l'extérieur. Ainsi, lorsqu'un afficheur selon l'invention est agencé dans un véhicule, le générateur d'image 9 et le pentaprisme 10 sont insérés à l'intérieur du tableau de bord. Le tableau de bord est muni d'un trou pour que l'image transmise par le pentaprisme 10 atteigne la lame semi-réfléchissante. Dans les dispositifs connus, une fenêtre de fermeture spécifique ferme ce trou. Dans ce mode de réalisation, le pentaprisme ferme directement le trou par sa face de sortie 17.

Pour répondre aux contraintes mécaniques nécessaires à une fenêtre de fermeture, la face de sortie 17 a une forme convexe ou concave, comme illustré sur la figure 3. En effet, une fenêtre de fermeture demande une résistance significative. De plus, ces courbures peuvent aussi avoir une fonction de correcteur optique de l'image, si cela est nécessaire.

## Revendications

1. Afficheur (1) tête haute compact, notamment pour véhicule automobile, comportant :
- un générateur d'image (9) configuré pour afficher une image (7) sur une surface d'affichage (2),
- un élément optique (3) semi-réfléchissant agencé à distance du générateur d'image (9) et configuré pour former d'un premier côté de l'élément optique (3) une image virtuelle (4) de l'image (7) du générateur d'image (9), l'image virtuelle (4) étant visible depuis une fenêtre de vue (5) située d'un deuxième côté de l'élément optique (3),
**caractérisé en ce que** l'afficheur (1) comporte une pièce optique (10) configurée pour allonger le chemin optique de l'image (7) la traversant en allant du générateur d'image (9) à l'élément optique (3), la pièce optique (10) comportant au moins une face d'entrée (14) et une face de sortie (17) de l'image, ainsi qu'une première (15) et une seconde face (16) réfléchissante, la première face réfléchissante (15) étant configurée pour réfléchir l'image de la face d'entrée (14) vers la seconde face réfléchissante (16), et la seconde face réfléchissante (16) étant configurée pour réfléchir l'image (7) de la première face réfléchissante (15) vers la face de sortie (17), la face d'entrée (14) étant en outre sensiblement en contact avec la surface d'affichage (2) du générateur d'image (9).

2. Afficheur la revendication 1, **caractérisé en ce que** la pièce optique (10) est configurée de sorte que les faces sont ordonnées latéralement sur la périphérie de la pièce optique de la façon suivante : seconde face de réflexion (16), face d'entrée (14), face de sortie (17), et première face de réflexion (15).

3. Afficheur selon l'une quelconque des revendications précédentes, **caractérisé en ce que** le générateur d'image (9) et la pièce optique (10) sont solidaires en déplacement.

4. Afficheur selon la revendication 3, **caractérisé en ce que** le générateur d'image (9) et la pièce optique (10) sont assemblés par une colle optique.

5. Afficheur selon l'une quelconque des revendications précédentes, **caractérisé en ce que** la pièce optique (10) est un pentaprisme comportant une face latérale supplémentaire (18).

6. Afficheur selon la revendication 5, **caractérisé en ce que** la face supplémentaire (18) est disposée entre les première (15) et seconde (16) faces réfléchissantes.

7. Afficheur selon l'une quelconque des revendications précédentes, **caractérisé en ce qu'**il comprend des moyens mécaniques (13) configurés pour déplacer la pièce optique (10) afin d'ajuster la fenêtre de vue (5) verticalement.

8. Afficheur selon la revendication 7, **caractérisé en ce que** les moyens mécaniques (13) sont configurés pour déplacer la pièce optique (10) afin d'ajuster la fenêtre de vue (5) latéralement

9. Afficheur selon l'une quelconque des revendications précédentes, **caractérisé en ce que** la face de sortie (17) forme une fenêtre de fermeture de l'afficheur (1).

10. Afficheur selon la revendication 9, **caractérisé en ce que** la face de sortie (17) est de forme convexe.

11. Afficheur selon la revendication 9, **caractérisé en ce que** la face de sortie (17) est de forme concave.

12. Afficheur selon l'une quelconque des revendications précédentes, **caractérisé en ce que** l'élément optique (3) est une lame semi-réfléchissante.

13. Afficheur selon l'une quelconque des revendications précédentes, **caractérisé en ce que** le générateur d'image (9) comprend au moins une source de lumière (11) apte à émettre un faisceau lumineux, et une matrice de pixellisation (12) configurée pour former l'image virtuelle (4) à partir du faisceau lumineux.

## Patentansprüche

1. Kompaktes Head-up-Display (1), insbesondere für ein Kraftfahrzeug, das aufweist:
- einen Bildgenerator (9), der konfiguriert ist, ein Bild (7) auf einer Anzeigefläche (2) anzuzeigen,
- ein halbreflektierendes optisches Element (3), das in Abstand zum Bildgenerator (9) angeordnet und konfiguriert ist, auf einer ersten Seite des optischen Elements (3) ein virtuelles Bild (4) des Bilds (7) des Bildgenerators (9) zu formen, wobei das virtuelle Bild (4) von einem Sichtfenster (5) aus sichtbar ist, das sich auf einer zweiten Seite des optischen Elements (3) befindet,
**dadurch gekennzeichnet, dass** das Display (1) ein optisches Bauteil (10) aufweist, das konfiguriert ist, den optischen Weg des Bilds (7) zu verlängern, das es durchquert, indem es vom Bildgenerator (9) zum optischen Element (3) geht, wobei das optische Bauteil (10) mindestens eine Eingangsseite (14) und eine Ausgangsseite (17) des Bilds sowie eine erste (15) und eine zweite reflektierende Seite (16) aufweist, wobei die erste reflektierende Seite (15) konfiguriert ist, das Bild von der Eingangsseite (14) zur zweiten reflektierenden Seite (16) zu reflektieren, und die zweite reflektierende Seite (16) konfiguriert ist, das Bild (7) von der ersten reflektierenden Seite (15) zur Ausgangsseite (17) zu reflektieren, wobei die Eingangsseite (14) außerdem im Wesentlichen mit der Anzeigefläche (2) des Bildgenerators (9) in Kontakt ist.

2. Display nach Anspruch 1, **dadurch gekennzeichnet, dass** das optische Bauteil (10) so konfiguriert ist, dass die Seiten seitlich auf dem Umfang des optischen Bauteils folgendermaßen angeordnet sind: zweite Reflexionsseite (16), Eingangsseite (14), Ausgangsseite (17), und erste Reflexionsseite (15) .

3. Display nach einem der vorhergehenden Ansprüche, **dadurch gekennzeichnet, dass** der Bildgenerator (9) und das optische Bauteil (10) in Verschiebung fest miteinander verbunden sind.

4. Display nach Anspruch 3, **dadurch gekennzeichnet, dass** der Bildgenerator (9) und das optische Bauteil (10) durch einen optischen Kleber zusammengebaut werden.

5. Display nach einem der vorhergehenden Ansprüche, **dadurch gekennzeichnet, dass** das optische Bauteil (10) ein Pentaprisma ist, das eine zusätzliche seitliche Seite (18) aufweist.

6. Display nach Anspruch 5, **dadurch gekennzeichnet, dass** die zusätzliche Seite (18) zwischen der ersten (15) und der zweiten (16) reflektierenden Seite angeordnet ist.

7. Display nach einem der vorhergehenden Ansprüche, **dadurch gekennzeichnet, dass** es mechanische Einrichtungen (13) enthält, die konfiguriert sind, das optische Bauteil (10) zu verschieben, um das Sichtfenster (5) senkrecht zu justieren.

8. Display nach Anspruch 7, **dadurch gekennzeichnet, dass** die mechanischen Einrichtungen (13) konfiguriert sind, das optische Bauteil (10) zu verschieben, um das Sichtfenster (5) seitlich zu justieren.

9. Display nach einem der vorhergehenden Ansprüche, **dadurch gekennzeichnet, dass** die Ausgangsseite (17) ein Verschlussfenster des Displays (1) bildet.

10. Display nach Anspruch 9, **dadurch gekennzeichnet, dass** die Ausgangsseite (17) konvex ist.

11. Display nach Anspruch 9, **dadurch gekennzeichnet, dass** die Ausgangsseite (17) konkave ist.

12. Display nach einem der vorhergehenden Ansprüche, **dadurch gekennzeichnet, dass** das optische Element (3) eine halbreflektierende Lamelle ist.

13. Display nach einem der vorhergehenden Ansprüche, **dadurch gekennzeichnet, dass** der Bildgenerator (9) mindestens eine Lichtquelle (11), die einen Lichtstrahl emittieren kann, und eine Pixellierungsmatrix (12) enthält, die konfiguriert ist, das virtuelle Bild (4) ausgehend vom Lichtstrahl zu formen.

## Claims

1. Compact head-up display (1), notably for an automobile vehicle, comprising:
- an image generator (9) configured for displaying an image (7) on a display surface (2),
- a semi-reflecting optical element (3) arranged at a distance from the image generator (9) and configured for forming, on a first side of the optical element (3), a virtual image (4) of the image (7) of the image generator (9), the virtual image (4) being visible from a viewing window (5) situated on a second side of the optical element (3),
**characterized in that** the display (1) comprises an optical component (10) configured for lengthening the optical path of the image (7) passing through it going from the image generator (9) to the optical element (3), the optical component (10) comprising at least one entry face (14) and one exit face (17) for the image, together with a first reflecting face (15) and a second reflecting face (16), the first reflecting face (15) being configured for reflecting the image from the entry face (14) toward the second reflecting face (16), and the second reflecting face (16) being configured for reflecting the image (7) from the first reflecting face (15) toward the exit face (17), the entry face (14) being furthermore substantially in contact with the display surface (2) of the image generator (9).

2. Display according to Claim 1, **characterized in that** the optical component (10) is configured in such a manner that the faces are ordered laterally on the periphery of the optical element in the following manner: second reflection face (16), entry face (14), exit face (17), and first reflection face (15).

3. Display according to either one of the preceding claims, **characterized in that** the image generator (9) and the optical component (10) move together.

4. Display according to Claim 3, **characterized in that** the image generator (9) and the optical component (10) are assembled by an optical adhesive bond.

5. Display according to any one of the preceding claims, **characterized in that** the optical component (10) is a pentaprism comprising an additional lateral face (18) .

6. Display according to Claim 5, **characterized in that** the additional face (18) is disposed between the first (15) and second (16) reflecting faces.

7. Display according to any one of the preceding claims, **characterized in that** it comprises mechanical means (13) configured for moving the optical component (10) in order to adjust the viewing window (5) vertically.

8. Display according to Claim 7, **characterized in that** the mechanical means (13) are configured for moving the optical component (10) in order to adjust the viewing window (5) laterally

9. Display according to any one of the preceding claims, **characterized in that** the exit face (17) forms a window for closing the display (1).

10. Display according to Claim 9, **characterized in that** the exit face (17) has a convex shape.

11. Display according to Claim 9, **characterized in that** the exit face (17) has a concave shape.

12. Display according to any one of the preceding claims, **characterized in that** the optical element (3) is a semi-reflecting plate.

13. Display according to any one of the preceding claims, **characterized in that** the image generator (9) comprises at least one light source (11) designed to emit a light beam, and a pixelization matrix (12) configured for forming the virtual image (4) using the light beam.
